Europäisches Patentamt

European Patent Office

Office européen des brevets

(11) Publication number: **0 452 141 A2**

# EUROPEAN PATENT APPLICATION

(21) Application number: **91303242.1**

(22) Date of filing: **11.04.91**

(51) Int. Cl.$^5$: **G01K 13/00**

(30) Priority: **12.04.90 GB 9008364**
**26.11.90 GB 9025655**

(43) Date of publication of application:
**16.10.91 Bulletin 91/42**

(84) Designated Contracting States:
**BE CH DE FR GB IT LI NL SE**

(71) Applicant: **DE BEERS INDUSTRIAL DIAMOND**
**DIVISION (PROPRIETARY) LIMITED**
**43 Main Street**
**Johannesburg Transvaal (ZA)**

(72) Inventor: **Jones, Barbara Lynn**
**80 Chisbury Close**
**Forest Park, Bracknell RG12 3TX (GB)**
Inventor: **Phaal, Cornelius**
**Glade Cottage, St. Anne's Glade**
**Bagshot, Surrey GR19 5EF (GB)**

(74) Representative: **Williams, Trevor John et al**
**J.A. KEMP & CO. 14 South Square Gray's Inn**
**London WC1R 5EU (GB)**

(54) **The determination of a characteristic of a medium.**

(57)    A method is provided for determining a characteristic such as the temperature of a medium. This medium will typically be a fluid and preferably be a liquid. The method involves providing a layer (10, 32, 50) of a conductive or semi-conductive material, placing the layer (10, 32, 50) in thermal contact with the medium, causing a voltage pulse to be applied to the layer (10, 32, 50), determining the rate of change of a response induced by the voltage pulse, e.g. the rate of change of a current induced by the voltage pulse, comparing that rate of change with a standard and using that comparison to make the characteristic determination.

FIG.1

EP 0 452 141 A2

This invention relates to the determination of a characteristic of a medium using, for example, a thermistor.

A thermistor is a temperature sensitive resistor used for measuring the temperature of various environments. It is known from the literature that semiconducting diamond can be used as a thermistor. Diamond is extremely resistant to erosion and abrasion and so is useful for measuring the temperature of various hostile environments. It also operates as a thermistor at higher temperatures than conventional metal-oxide thermistors.

The absolute value of resistance of the thermistor is a measure of the temperature of the environment in which it is placed.

United States Patent No. 3,435,399 describes a thermistor device comprising a semi-conducting single crystal diamond and two electrically conductive leads bonded to the crystal to provide ohmic contact therewith. The specification provides typical curves illustrating resistivity versus temperature for natural IIb type semi-conducting diamond as contrasted with the corresponding characteristics of a thermistor of the invention.

According to the present invention, a method of determining a characteristic of a medium includes the steps of:

(i) providing a layer of a conductive or semi-conductive material;

(ii) placing the layer in thermal contact with the medium;

(iii) causing a voltage pulse to be applied to the layer;

(iv) determining the rate of change of a response induced by the voltage pulse;

(v) comparing that rate of change with a standard; and

(vi) using that comparison to make the characteristic determination.

The invention will be further described by way of non-limitative example with reference to the accompanying drawings, in which:-

Figure 1 illustrates a sectional side view of a semi-conducting diamond thermistor useful in the practice of the invention;

Figure 2 illustrates a typical voltage pulse and corresponding current pulse;

Figure 3 illustrates a sectional side view of a second embodiment of a thermistor useful in the practice of the invention;

Figure 4 illustrates a plan view of a third embodiment of a thermistor useful in the practice of the invention;

Figure 5 is a section along the line 5-5 of Figure 4; and

Figure 6 illustrates diagramatically diamond thermistors used as a liquid level sensor and the current wave forms generated therefrom.

It has been found that the rate of change of a response induced by a voltage pulse applied to a layer of conductive or semi-conductive material in thermal contact with a medium varies with the nature of that medium. For example, the rate of change of the response will vary according to the temperature of the medium, its humidity, whether it is a gas or liquid, the mass flow or viscosity thereof, and if the medium is liquid, the level thereof. The rate of change is a sensitive and accurate means of determining a characteristic of the medium.

The medium will generally be a fluid and preferably a liquid. Where the medium is a liquid, the invention may be used to determine the level of the liquid. This aspect of the invention is described more fully hereinafter with reference to Figure 6.

Typically, the characteristic of the medium which is determined is its temperature.

The layer may be a semi-conducting diamond having spaced leads in ohmic contact with it. The diamond may, in one form of the invention, have at least two surfaces, the one surface being adapted to be placed in thermal contact with the medium, and the other surface having spaced recesses or holes formed therein which receive the leads. Typically, this body will be elongate and the two surfaces will be defined by the ends thereof.

The semi-conducting diamond may also be a body in the form of a cube with the leads typically being bonded to opposite surfaces thereof.

The layer, in another form of the invention, may be in thermal contact with an electrically non-conducting diamond. The electrically non-conducting diamond will generally be exposed to, or placed in contact with, the medium. The layer in this form of the invention may be a semi-conducting diamond layer. The semi-conducting diamond is preferably p-type in nature, e.g. boron doped diamond, or a naturally occurring semi-conducting diamond. The layer may also be metallic. An example of a suitable metal is platinum. The electrically non-conductive diamond is preferably diamond of type Ib or type IIa.

Preferably, it is the rate of change of a current induced by the voltage pulse that is determined in step (iv) above. The rate of change of resistance may also be determined.

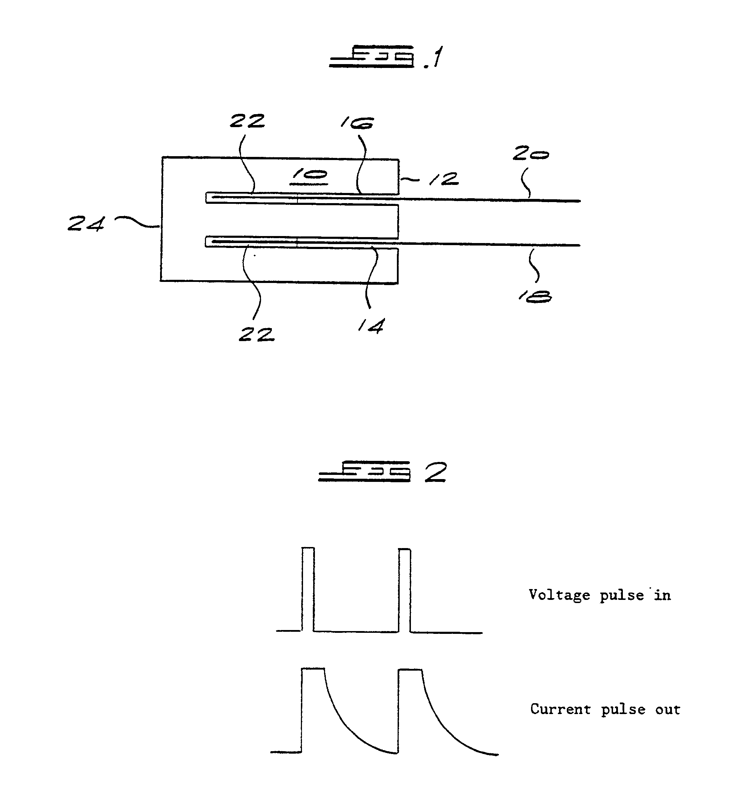

The invention will further be illustrated with reference to the accompanying drawings. Referring first to Figure 1, there is shown a semi-conducting diamond body 10 which has an elongate, cylindrical shape. Extending into the body from one end 12 thereof are two holes 14, 16. The holes 14, 16 accommodate electrical leads 18, 20 which are held in position by means of a suitable braze or solder 22. The leads thus make ohmic contact with the diamond.

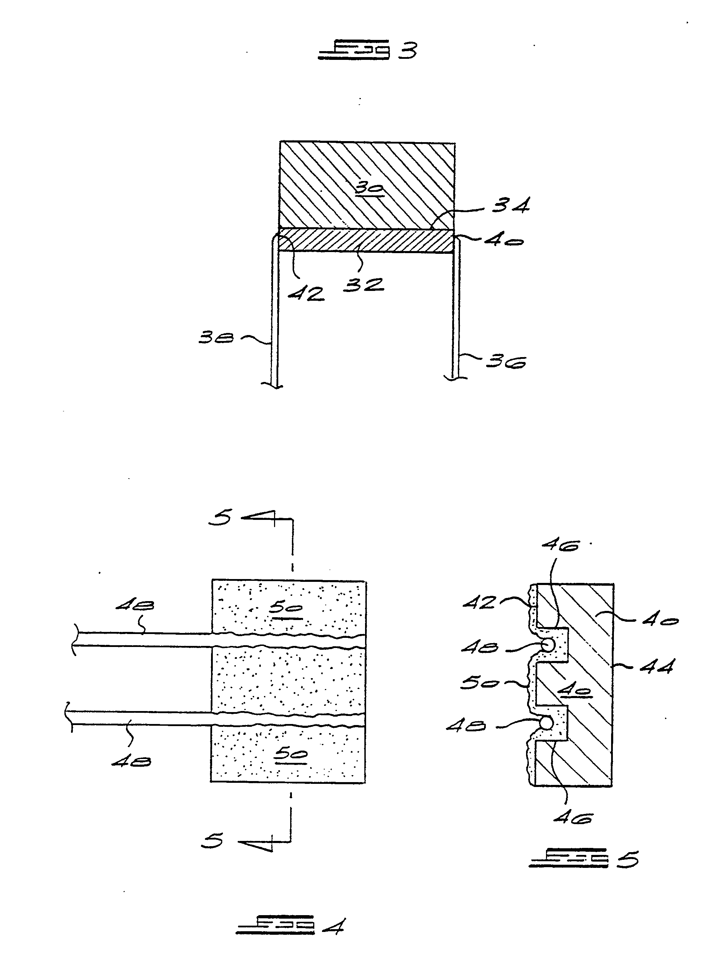

In use, the end 24 of the diamond body 10 is inserted into an environment, a characteristic of which is to be determined. Thereafter, a voltage pulse is applied to the leads to heat the diamond body. A typical voltage pulse is illustrated graphically by Figure 2. The rate of decay of each induced current pulse, shown graphically also by Figure 2, is determined. This rate of decay is dependent on the nature of the environment in which the diamond body is inserted. Using the illustrated thermistor it is possible to determine the characteristic of a variety of environments, even hostile environments such as corrosive gases or liquids because of the inertness of diamond to such environments. Examples of characteristics which can be determined are temperature, humidity, and whether the environment is liquid or gas.

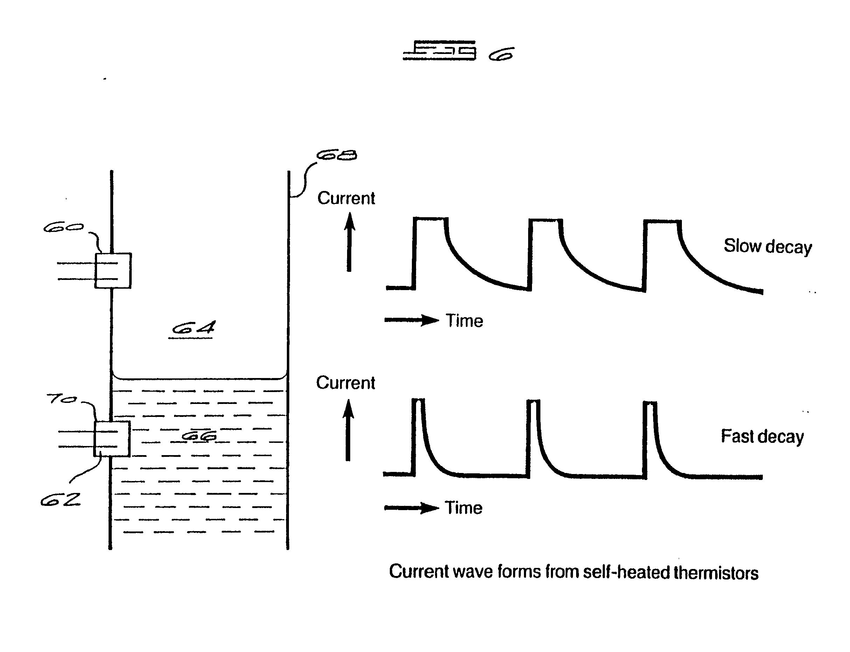

Figure 3 illustrates a second embodiment of a thermistor. Referring to this figure, there is shown a thermistor comprising a non-conducting diamond body 30 having a layer 32 of metal or semi-conducting diamond bonded to a surface 34 thereof. Spaced leads 36, 38 are bonded to the side surfaces 40, 42 of the layer 32. In use, the non-conducting diamond body 30 is placed in the environment, a characteristic of which is to be determined. A voltage pulse is applied across the layer 32 and the rate of change of the current induced by this voltage pulse determined.

A third embodiment of a thermistor is illustrated by Figures 4 and 5. Referring to these figures, a body 40 of non-conducting diamond has major surfaces 42 and 44 on each of opposite sides thereof. Two grooves 46 are formed in the surface 42. Located in the grooves 46 are leads 48. A layer 50 of metal or semi-conducting diamond is provided over the entire surface 42 and partially fills the grooves 46. This layer brings the leads into thermal contact with the body 40.

The semi-conducting diamond layer 50 will preferably be produced by chemical vapour deposition or by ion implantation. By way of example, a boron doped layer of diamond of 10 micron thickness was deposited on the surface 42 of a Ib type diamond (1mm$^3$ cube). This layer was formed by chemical vapour deposition. The boron concentration of the layer was in the range 1000 to 5000ppm.

The thermistors described above are all useful in the practice of the invention which may be used for determining the characteristics of hostile and other mediums. For example, the invention may be used to determine the temperature of components in nuclear instruments or of cryogenic mediums. The invention may also be used for determining the liquid level or the quality of oils in sensitive engines such as those used in helicopters where the temperature or quality of the oil is of critical importance for the proper working of the engine.

A practical example of the invention is illustrated schematically by Figure 6. Referring to this drawing, diamond thermistors 60, 62 of the type illustrated by Figure 1 are placed in thermal contact with air 64 and liquid 66 in a container 68. Voltage pulses are applied across the two diamond thermistors and the decay profiles of the currents induced by such pulses are illustrated to the right of the container 68. It will be noted that the profile of the rate of decay of the current in air is very different to that of the liquid. When the liquid level drops to a point below the top surface 70 of the thermistor 62, the profile of the rate of decay of the current will change and provide an accurate and immediate indication of the level of the liquid in the container. Similarly, if the quality of the liquid 66 varies, the profile of the rate of decay of the current induced in the thermistor 62 will differ from that illustrated. By providing suitable standards, it is possible accurately to determine the quality or state of the liquid at any given time.

## Claims

1.  A method of determining a characteristic of a medium includes the steps of:
    (i) providing a layer (10, 32, 50) of a conductive or semi-conductive material;
    (ii) placing the layer (10, 32, 50) in thermal contact with the medium;
    (iii) causing a voltage pulse to be applied to the layer (10, 32, 50);
    (iv) determining the rate of change of a response induced by the voltage pulse;
    (v) comparing that rate of change with a standard; and
    (vi) using that comparison to make the characteristic determination.

2.  A method of claim 1 wherein the characteristic of the medium which is determined is its temperature.

3.  A method of claim 1 or claim 2 wherein the medium is a fluid.

4.  A method of claim 3 wherein the fluid is a liquid.

5.  A method of claim 1 wherein the medium is a liquid and the characteristic which is determined is the level of the liquid.

6.  A method of any one of the preceding claims wherein the layer (10) is a semi-conducting diamond and spaced leads (18, 20) are in ohmic contact with the diamond.

7.  A method of claim 6 wherein the diamond is a body ( 10) having at least two surfaces (12, 24), the one surface (24) being adapted to be placed in thermal contact with the medium and the other surface (12) having spaced recesses or holes (14, 16) formed therein which receive the leads ( 18, 20).

8. A method of claim 7 wherein the body (10) is elongate and the two surfaces (12, 24) are defined by the ends thereof.

9. A method of claim 7 wherein the body is a cube.

10. A method of any one of claims 1 to 5 wherein the layer (32) is in thermal contact with an electrically non-conducting diamond (30).

11. A method of claim 10 wherein the layer (32) is a semi-conducting diamond layer.

12. A method of claim 10 wherein the layer (32) is a metallic layer.

13. A method according to any one of the preceding claims wherein the rate of change of a current induced by the voltage pulse is determined in step (iv).

__FIG__.1

22  16

10  ~ 12

20

24 ~

22  14

18

__FIG__ 2

Voltage pulse in

Current pulse out

_Fig 3_

30

34

40

42  32

38

36

_Fig 4_

5

48

50

48

50

5

48

46

42

40

48

44

50

40

48

46

_Fig 5_

FIG. 6

Slow decay

Fast decay

Current

Time

Current

Time

Current wave forms from self-heated thermistors